# EUROPÄISCHE PATENTSCHRIFT

(11) **EP 1 845 576 B1**
(45) Veröffentlichungstag und Bekanntmachung des Hinweises auf die Patenterteilung: **06.06.2012**
(21) Anmeldenummer: 07104979.5
(22) Anmeldetag: 27.03.2007
(51) Int. Cl.: H01M 8/04, H01M 8/06, H01M 8/12

(54) **Brennstoffzellensystem**
Fuel cell system
Système de cellules combustibles

(30) Priorität: 12.04.2006 DE 102006017615
(43) Veröffentlichungstag der Anmeldung: 17.10.2007
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- EP-A- 1 465 274
- EP-A- 1 557 896
- US-A1- 2003 093 949
- US-B1- 6 608 463

## Beschreibung

Die vorliegende Erfindung betrifft ein Brennstoffzellensystem, insbesondere in einem Kraftfahrzeug, mit den Merkmalen des Oberbegriffs des Anspruchs 1.

Ein derartiges Brennstoffzellensystem ist aus der US 6,608,463 B1 bekannt. Es umfasst eine Brennstoffzelle zur Stromerzeugung aus Oxidatorgas und Brenngas, die einen Anodeneingang, einen Anodenausgang, einen Kathodeneingang, einen Kathodenausgang und wenigstens einen Stromanschluss aufweist, eine Reformer zur Brenngaserzeugung aus Oxidatorgas und Kraftstoff, der einen Brenngasausgang aufweist, eine erste Oxidatorleitung zur Versorgung der Brennstoffzelle mit Oxidatorgas, die mit dem Kathodeneingang verbunden ist, eine zweite Oxidatorleitung zur Versorgung des Reformers mit Oxidatorgas, eine Brennstoffzellenabgasleitung, die über eine Anodenabgasleitung an den Anodenausgang und über eine Kathodenabgasleitung an den Kathodenausgang angeschlossen ist, einen Restgasbrenner zum Verbrennen eines Gemischs aus Anodenabgas und Kathodenabgas, der an die Brennstoffzellenabgasleitung angeschlossen ist, und einen Wärmeübertrager, der einerseits stromab des Restgasbrenners in die Brennstoffzellenabgasleitung und andererseits in die erste Oxidatorleitung eingebunden ist, wobei stromab des Restgasbrenners ein Oxidationskatalysator in die Brennstoffzellenabgasleitung eingebunden ist, wobei zumindest der Reformer, die Brennstoffzelle, der Restgasbrenner und der Wärmeübertrager innerhalb einer thermisch isolierenden Isolationsbox angeordnet sind. Beim bekannten Brennstoffzellensystem ist dem Reformer ein Gemischerzeuger zum Verdampfen eines flüssigen Kraftstoffs und Vermischen des dampfförmigen Kraftstoffs mit Oxidatorgas vorgeschaltet, der einen mit der zweiten Oxidatorleitung verbundenen Oxidatoreinlass und einen Kraftstoffeinlass sowie einen mit einem Gemischeinlass des Reformers verbundenen Gemischauslass aufweist. Ferner ist beim bekannten Brennstoffzellensystem der Oxidationskatalysator im Reformer und somit ebenfalls innerhalb der Isolationsbox angeordnet.

Ein weiteres Brennstoffzellensystem ist zum Beispiel aus der DE 10 2005 001 361 bekannt und umfasst eine Brennstoffzelle zur Stromerzeugung aus Brenngas und Oxidatorgas, wozu in der Regel Luft oder Sauerstoff verwendet wird. Die Brennstoffzelle weist einen Anodeneingang, einen Kathodeneingang, einen Anodenausgang, einen Kathodenausgang und zumindest einen Stromanschluss auf. Das Brennstoffzellensystem umfasst weiter einen Reformer zur Brenngaserzeugung aus Kraftstoff und Oxidatorgas, der einen Kraftstoffeingang, einen Oxidatoreingang und einen Brenngasausgang aufweist. Eine erste Oxidatorleitung dient zur Versorgung der Brennstoffzelle mit Oxidatorgas und ist hierzu mit dem Kathodeneingang der Brennstoffzelle verbunden. Eine zweite Oxidatorleitung dient zur Versorgung des Reformers mit Oxidatorgas und ist hierzu mit dem Oxidatoreingang des Reformers verbunden. Des weiteren ist eine Brennstoffzellenabgasleitung vorgesehen, die eingangsseitig an eine mit dem Anodenausgang der Brennstoffzelle verbundene Anodenabgasleitung und an eine mit dem Kathodenausgang der Brennstoffzelle verbundene Kathodenabgasleitung angeschlossen ist. Ferner ist ein Restgasbrenner zum Verbrennen eines Gemischs aus Anodenabgas und Kathodenabgas vorgesehen, der in der Brennstoffzellenabgasleitung, also stromab der Anodenabgasleitung und stromab der Kathodenabgasleitung angeordnet ist. Mit Hilfe eines Wärmeübertragers, der einerseits in die Brennstoffzellenabgasleitung stromab des Restgasbrenners und andererseits in die erste Oxidatorleitung eingebunden ist, wird der Abgasstrom der Brennstoffzelle bzw. des Restgasbrenners mit dem in der Brennstoffzelle zugeführten Oxidatorstrom wärmeübertragend gekoppelt.

Weitere Brennstoffzellensysteme sind beispielsweise aus der DE 103 15 255 A1 und aus der DE 10 2004 002 337 A1 bekannt.

Die vorliegende Erfindung beschäftigt sich mit dem Problem, für ein Brennstoffzellensystem der eingangs genannten Art eine verbesserte Ausführungsform anzugeben, die sich insbesondere durch reduzierte Schadstoffemissionen auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Abgase des Restgasbrenners durch einen Oxidationskatalysator zu führen. Auf diese Weise können Verbrennungsprodukte, die beim Verbrennungsprozess im Restgasbrenner nicht oder nicht vollständig umgesetzt werden konnten, oxidiert werden, um so die Schadstoffemission des Brennstoffzellensystems zu reduzieren. Beispielsweise können Kohlenmonoxide in Kohlendioxide aufoxidiert werden.

Grundsätzlich ist denkbar, den Oxidationskatalysator stromauf des Wärmeübertragers in der Brennstoffzellenabgasleitung anzuordnen oder durch eine im Wärmeübertrager ausgebildete katalytisch aktive Beschichtung in den Wärmeübertrager zu integrieren. Allerdings können die Abgase des Restgasbrenners, insbesondere bei Hochtemperatur-Brennstoffzellen, so hohe Temperaturen erreichen, dass ein herkömmlicher Oxidationskatalysator nicht funktioniert bzw. beschädigt wird. Sofern mit solchen Temperaturproblemen gerechnet werden muss, wird die erfindungsgemäße Anordnung des Oxidationskatalysators stromab des Wärmeübertragers bevorzugt.

Bei einer Weiterbildung des erfindungsgemäßen Brennstoffzellensystems kann zumindest ein Zusatzwärmeübertrager vorgesehen sein, der einerseits stromab des Wärmeübertragers in die Brennstoffzellenabgasleitung und andererseits in einen Abwärmepfad zur Entnahme von Wärme aus dem Abgas der Brennstoffzelle bzw. des Restgasbrenners eingebunden sein kann. Mit Hilfe eines derartigen Zusatzwärmeübertragers kann der Energiegehalt der Brennstoffzellenabgase weiter ausgenutzt werden, um so den Wirkungsgrad des Brennstoffzellensystems zu steigern. Der Zusatzwärmeübertrager kann beispielsweise zum Beheizen von Kühlmittel eines Kühlkreises einer Brennkraftmaschine des Kraftfahrzeugs, zum Beheizen von Luft einer Innenraumheizeinrichtung des Kraftfahrzeugs oder zum Vorwärmen des dem Reformer zugeführten Oxidatorgases genutzt werden.

Im Hinblick auf diesen Zusatzwärmeübertrager ergeben sich für den Oxidationskatalysator zusätzliche Möglichkeiten für dessen Positionierung bzw. Anordnung und Ausgestaltung. Beispielsweise lässt sich der Oxidationskatalysator, insbesondere in Abhängigkeit des vorhandenen Bauraums, in der Brennstoffzellenabgasleitung stromauf oder stromab des Zusatzwärmeübertragers anordnen. Besonders kompakt baut eine Ausführungsform, bei welcher der Oxidationskatalysator durch eine im Zusatzwärmeübertrager ausgebildete katalytisch aktive Beschichtung in den Zusatzwärmeübertrager integriert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

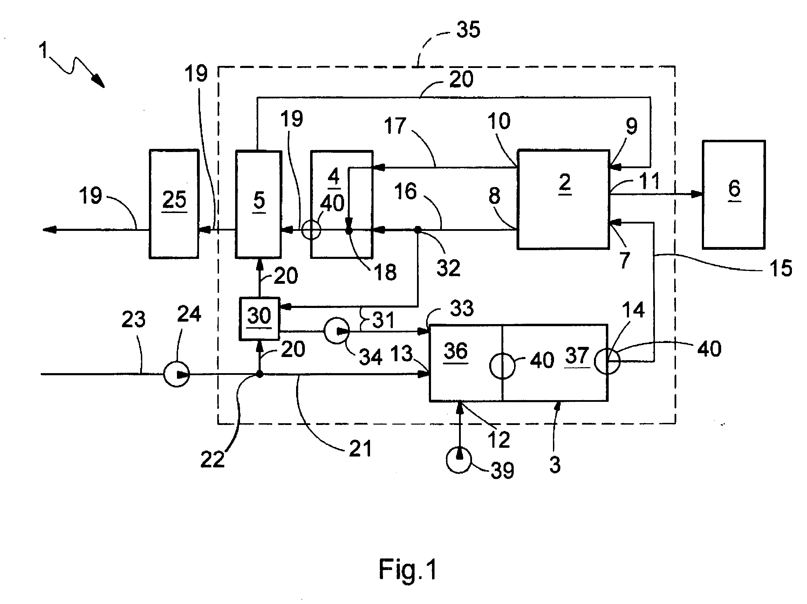

- Fig. 1 bis 4: jeweils eine stark vereinfachte, schaltplanartige Prinzipdarstellung eines Brennstoffzellensystems bei unterschiedlichen Ausführungsformen.

Entsprechend den Fig. 1 bis 4 umfasst ein Brennstoffzellensystem 1, das zum Beispiel in einem Kraftfahrzeug angeordnet sein kann, eine Brennstoffzelle 2, einen Reformer 3, einen Restgasbrenner 4 und einen Wärmeübertrager 5, der im folgenden auch als Hauptwärmeübertrager 5 bezeichnet wird.

Die Brennstoffzelle 2 kann beispielsweise als Festkörperbrennstoffzelle (SOFC) und insbesondere als Hochtemperatur-Brennstoffzelle ausgestaltet sein. Sie dient zur Stromerzeugung, um damit beispielsweise zumindest einen elektrischen Verbraucher 6 des Kraftfahrzeugs mit Strom zu versorgen. Bei diesen elektrischen Verbrauchern 6 handelt es sich vorzugsweise um solche, die für den eigentlichen Betrieb des Fahrzeugs nicht erforderlich sind, sondern im wesentlichen zur Komfortsteigerung des Fahrzeugsführers dienen, vor allem dann, wenn das Fahrzeug selbst ruht. Beispielsweise handelt es sich beim elektrischen Verbraucher 6 um eine Klimaanlage, eine Telefonanlage, einen Computer, ein Faxgerät, ein Fernsehgerät, eine Kochstelle, einen Mikrowellenherd, einen Kühlschrank oder das Brennstoffzellensystem 1 selbst.

Die Brennstoffzelle 2 stellt im Betrieb in bekannter Weise Strom aus einem anodenseitig zugeführten Brenngas und einem kathodenseitig zugeführten Oxidatorgas her. Beim Oxidatorgas handelt es sich üblicherweise um Luft oder um reinen Sauerstoff. Beim Brenngas handelt es sich um ein vom Reformer 3 hergestelltes wasserstoffhaltiges Reformatgas oder Synthesegas. Die Brennstoffzelle 2 weist einen Anodeneingang 7 einen Anodenausgang 8, einen Kathodeneingang 9, einen Kathodenausgang 10 und zumindest einen elektrischen Anschluss oder Stromanschluss 11 auf. Letzterer ist mit dem wenigstens einen Verbraucher 6 verbunden.

Der Reformer 3 dient zur Erzeugung des Brenngases aus Kraftstoff und aus Oxidatorgas. Als Oxidatorgas wird auch hier vorzugsweise Luft bzw. reiner Sauerstoff verwendet. Als Kraftstoff wird vorzugsweise ein Kohlenwasserstoff, insbesondere der in einem mit dem Brennstoffzellensystem 1 ausgestatteten Fahrzeug zum Betreiben einer Brennkraftmaschine ohnehin vorhandenen Kraftstoff verwendet, also vorzugsweise Benzin oder Diesel. Hierzu weist der Reformer 3 einen Kraftstoffeingang 12, einen Oxidatoreingang 13 und einen Brenngasausgang 14 auf. Letzterer ist über eine Brenngasleitung 15 mit dem Anodeneingang 7 verbunden.

An den Anodenausgang 8 ist eine Anodenabgasleitung 16 angeschlossen, die Anodenabgas von der Brennstoffzelle 2 abführt. An den Kathodenausgang 10 ist eine Kathodenabgasleitung 17 angeschlossen, die Kathodenabgas von der Brennstoffzelle 2 wegführt. Die Kathodenabgasleitung 17 ist bei 18 an die Anodenabgasleitung 16 angeschlossen bzw. mit dieser zusammengeführt. Ab dieser Anschlussstelle 18 bildet die Anodenabgasleitung 16 zusammen mit der Kathodenabgasleitung 17 eine Brennstoffzellenabgasleitung 19. Diese ist demnach über die Anodenabgasleitung 16 mit dem Anodenausgang 8 und über die Kathodenabgasleitung 17 mit dem Kathodenausgang 10 verbunden. Die Anschlussstelle 18 ist hierbei innerhalb des Restgasbrenners 4 angeordnet bzw. ausgebildet. Der Restgasbrenner 4 ist dabei eingangsseitig an die Anodenabgasleitung 16 und an die Kathodenabgasleitung 17 und ausgangsseitig an die Brennstoffzellenabgasleitung 19 angeschlossen. Der Restgasbrenner 4 dient zum Verbrennen eines Gemischs aus Anodenabgas und aus Kathodenabgas.

Durch die Verbrennung der Abgase der Brennstoffzelle 2 führt der Restgasbrenner 4 zum einen zu einer signifikanten Reduzierung der Schadstoffemission des Brennstoffzellensystems 1 und zum andern zu einer Temperaturanhebung im Abgas der Brennstoffzelle 2. Die Wärmeenergie kann über den Hauptwärmeübertrager 5 zumindest teilweise zum Vorwärmen des der Brennstoffzelle 2 zugeführten Oxidatorgases verwendet werden, um so den Brennstoffzellenprozess zu unterstützen.

Die Brennstoffzelle 2 wird mit Hilfe einer ersten Oxidatorleitung 20 mit dem Oxidatorgas versorgt. Hierzu ist die erste Oxidatorleitung 20 an den Kathodeneingang 9 angeschlossen. Die Versorgung des Reformers 3 mit Oxidatorgas erfolgt mittels einer zweiten Oxidatorleitung 21, die an den Oxidatoreingang 13 angeschlossen ist. Beide Oxidatorleitungen 20, 21 zweigen bei 22 von einer gemeinsamen Oxidatorversorgungsleitung 23 ab, in der insbesondere ein Gebläse oder eine Pumpe 24 stromauf der Abzweigung 22 angeordnet sein kann. Das Gebläse 24 treibt das Oxidatorgas zur Brennstoffzelle 2 bzw. zum Reformer 3 hin an.

Der Hauptwärmeübertrager 5 ist einerseits in die Brennstoffzellenabgasleitung 19 stromab des Restgasbrenners 4 und andererseits in die erste Oxidatorleitung 20 eingebunden. Der Hauptwärmeübertrager 5 bewirkt eine wärmeübertragende Kopplung zwischen den Verbrennungsabgasen des Restgasbrenners 4 und dem der Brennstoffzelle 2 zugeführten Oxidatorgas.

Um die Gefahr von Schadstoffemission des Brennstoffzellensystems 1 weiter zu reduzieren, ist zusätzlich ein Oxidationskatalysator 25 vorgesehen. Das katalytisch aktive Material diese Oxidationskatalysators 25 ist gezielt so ausgewählt, dass es im Brennstoffzellenabgas stromab des Restgasbrenners 4 gegebenenfalls noch vorhandene, nicht oder nur unvollständig oxidierte Reaktionsprodukte umsetzt und in unschädliche oder weniger schädliche Produkte aufoxidiert. Die Schadstoffbilanz des Brennstoffzellensystems 1 lässt sich dadurch verbessern.

Bei den in den Fig. 1 bis 4 gezeigten Ausführungsformen ist der Oxidationskatalysator 25 jeweils stromab des Hauptwärmeübertragers 5 in der Brennstoffzellenabgasleitung 19 angeordnet. Grundsätzlich ist auch eine Ausführungsform denkbar, bei welcher der Oxidationskatalysator 25 stromauf des Hauptwärmeübertragers 5 und stromab des Restgasbrenners 4 in der Brennstoffzellenabgasleitung 19 angeordnet ist. Ebenso ist denkbar, den Oxidationskatalysator 25 in Form einer katalytisch aktiven Beschichtung in den Hauptwärmeübertrager 5 zu integrieren. Üblicherweise sind jedoch die Abgase stromab des Restgasbrenners 4 so heiß, dass herkömmliche Katalysatormaterialien entweder nicht mehr funktionieren oder sogar zerstört werden. Bevorzugt ist daher die in den Varianten der Fig. 1 bis 4 gezeigte Anordnung des Oxidationskatalysators 25 stromab des Hauptwärmeübertragers 5.

Bei der in Fig. 1 gezeigten Ausführungsform enthält die Brennstoffzellenabgasleitung 19 stromab des Hauptwärmeübertragers 5 ausschließlich den Oxidationskatalysator 25, der nur die Katalysatorfunktion aufweist.

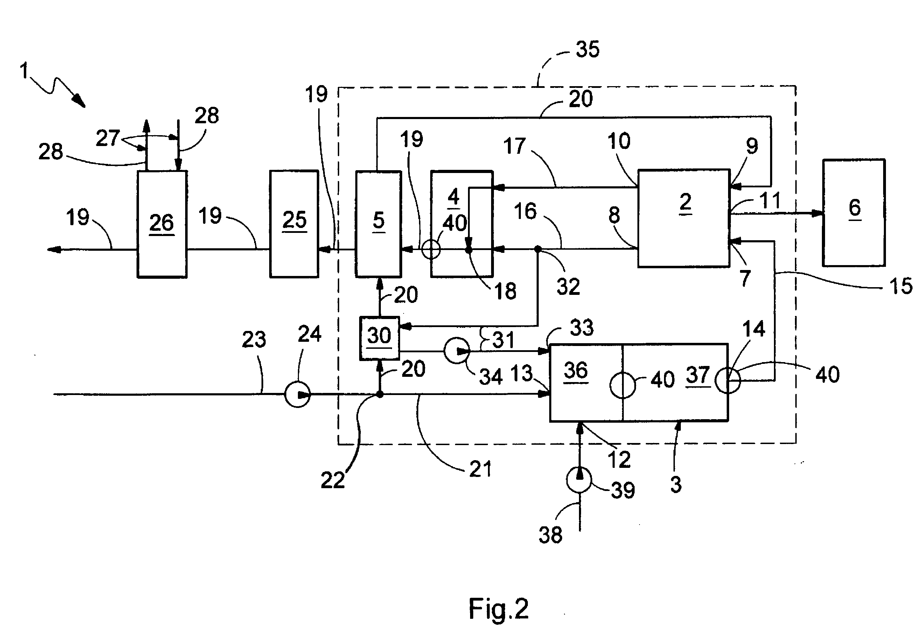

Bei den in den Fig. 2 bis 4 gezeigten Ausführungsformen ist das Brennstoffzellensystem 1 zusätzlich mit einem weiteren Wärmeübertrager 26 ausgestattet, der im folgenden als Zusatzwärmeübertrager 26 bezeichnet wird. Dieser Zusatzwärmeübertrager 26 ist dabei einerseits in die Brennstoffzellenabgasleitung 19 stromab des Hauptwärmeübertragers 5 und andererseits in einen Abwärmepfad 27 eingebunden. Hierdurch ist es möglich, dem Abgas der Brennstoffzelle 2 bzw. des Restgasbrenners 4 stromab des Hauptwärmeübertragers 5 weiter Wärme zu entziehen, um diese anderweitig sinnvoll zu nutzen.

Insgesamt lässt sich dadurch der Wirkungsgrad des Brennstoffzellensystems 1 verbessern.

Beispielsweise kann gemäß Fig. 2 besagter Abwärmepfad 27 durch eine Kühlmittelleitung 28 eines Kühlkreises einer Brennkraftmaschine des mit dem Brennstoffzellensystem 1 ausgestatteten Kraftfahrzeugs gebildet sein. Hierdurch ist es zum Beispiel möglich, dem Kühlkreis bedarfsabhängig Wärme zuzuführen. Das Brennstoffzellensystem 1 kann somit beispielweise als Zuheizer verwendet werden.

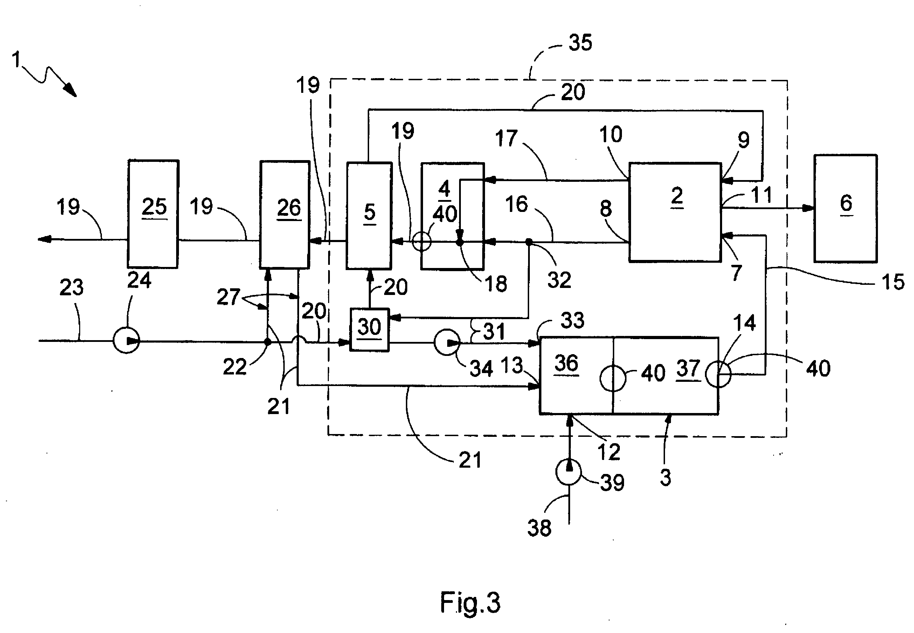

Bei der in Fig. 3 gezeigten Ausführungsform ist der Abwärmepfad 27 durch die zweite Oxidatorleitung 21 gebildet. Hierdurch ist es möglich, das dem Reformer 3 zugeführte Oxidatorgas vorzuwärmen, wodurch sich die Reformatbildung verbessern und somit der Wirkungsgrad des Brennstoffzellenprozesses steigern lässt.

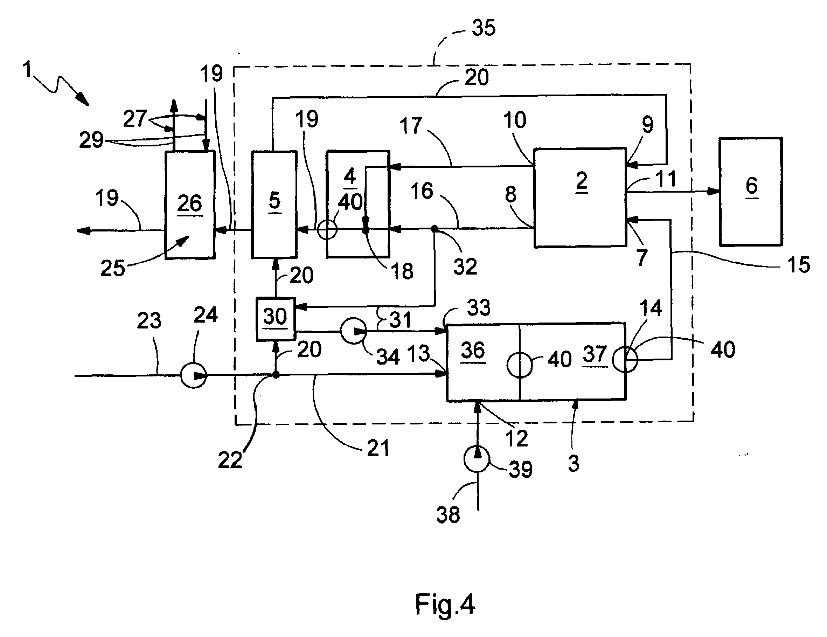

Entsprechend Fig. 4 kann der Abwärmepfad 27 beispielsweise auch durch eine Warmluftleitung 29 einer Innenraumheizeinrichtung des mit dem Brennstoffzellensystem 1 ausgestatteten Fahrzeugs gebildet sein. Somit lässt sich beispielsweise die fahrzeugseitige Innenraumheizung unterstützen. Ebenso ist es möglich, mit Hilfe des Brennstoffzellensystems 1 eine motorunabhängige Standheizung für das Fahrzeug zur realisieren, wenn beispielsweise ein die Warmluft antreibendes Gebläse einen der Verbraucher 6 bildet.

Entsprechend Fig. 2 kann der Oxidationskatalysator 25 in der Brennstoffzellenabgasleitung 19 stromauf des Zusatzwärmeübertragers 26 angeordnet sein. Bei der Umsetzung von Schadstoffen im Oxidationskatalysator 25 kann zusätzliche Wärme freigesetzt werden, die im nachfolgenden Zusatzwärmeübertrager 26 zur Übertragung in den jeweiligen Abwärmepfad 27 zur Verfügung steht.

Gemäß Fig. 3 ist es alternativ auch möglich, den Oxidationskatalysator 25 stromab des Zusatzwärmeübertragers 26 in die Brennstoffzellenabgasleitung 19 einzubinden. Diese Bauweise kann z.B. aus Bauraumgründen vorteilhaft sein.

Fig. 4 zeigt eine besonders kompakte Bauform, bei welcher der Oxidationskatalysator 25 in Form einer katalytisch aktiven Beschichtung in den Zusatzwärmeübertrager 26 integriert ist. Die Katalysatorbeschichtung 25 ist im Zusatzwärmeübertrager 26 an Wänden angebracht, die der Abgasströmung ausgesetzt sind. Dieses kombinierte Bauteil 25-26 besitzt somit eine Doppelfunktionalität.

Bei den in den Fig. 1 bis 4 gezeigten Ausführungsformen kann das Brennstoffzellensystem 1 optional mit einem Rezirkulationswärmeübertrager 30 ausgestattet sein, der dazu verwendet werden kann, das der Brennstoffzelle 2 zugeführte Oxidatorgas zusätzlich vorzuwärmen. Hierzu ist der Rezirkulationswärmeübertrager 30 einerseits stromauf des Hauptwärmeübertragers 5 in die erste Oxidatorleitung 20 und andererseits in eine Rückführleitung 31 eingebunden. Diese Rückführleitung 31 ist einenends bei 32 an die Anodenabgasleitung 16 und anderenends bei 33 an den Reformer 3 angeschlossen. Die Rückführleitung 31 führt somit an der Anschlussoder Abzweigstelle 32 abgezweigtes Anodenabgas über den Rezirkulationswärmeübertrager 30 dem Anodenabgaseingang 33 des Reformers 3 zu. Dabei befindet sich die Anschlussstelle 32 innerhalb der Anodenabgasleitung 16 stromauf der Verbindungsstelle 18, so dass nur Anodenabgas rückgeführt wird. Das Anodenabgas enthält mehr oder weniger nicht oder nur teilweise umgesetztes Brenngas und kann im Reformer 3 zur Verbesserung der Gemischbildung und letztlich zur Unterstützung der Reformatbildung genutzt werden. In der Rückführleitung 31 ist zum Beispiels stromab des Rezirkulationswärmeübertragers 30 eine Pumpe oder ein Gebläse 34 angeordnet, um das Anodenabgas zum Reformer 3 hin anzutreiben. Alternativ kann der Rezirkulationswärmeübertrager 30 auch dazu verwendet werden, dass dem Reformer 3 zugeführte Oxidatorgas vorzuwärmen. Hierzu ist dann der Rezirkulationswärmeübertrager 30 einerseits in die zweite Oxidatorleitung 21 und andererseits in die Rückführleitung 31 eingebunden.

Das Brennstoffzellensystem 1 weist gemäß den hier gezeigten Ausführungsformen der Fig. 1 bis 4 vorzugsweise eine thermisch isolierende Isolationsbox 35 auf, die hier durch eine unterbrochene Linie angedeutet ist. Die Isolationsbox 35 dient zur thermischen Kapselung der besonders heißen Komponenten des Brennstoffzellensystems 1, um einerseits eine Gefährdung außenliegender temperaturempfindlicher Gegenstände oder Körper zu vermeiden und um andererseits die Wärme, wenn möglich im System zu behalten, um die Effektivität des Brennstoffzellensystems 1 zu steigern. Innerhalb dieser Isolationsbox 35 sind zumindest die Brennstoffzelle 2, der Restgasbrenner 4 und der Hauptwärmeübertrager 5 angeordnet. Außerhalb der Isolationsbox 5 befindet sich jedenfalls der Oxidationskatalysator 25 und - soweit vorhanden - der Zusatzwärmeübertrager 26.

Bei den hier gezeigten Ausführungsformen sind außerdem der Rezirkulationswärmeübertrager 30 und der Reformer 3 innerhalb der Isolationsbox 35 angeordnet. Ebenso ist es möglich, den Reformer 3 und/oder den Rezirkulationswärmeübertrager 30 außerhalb der Isolationsbox 35 anzuordnen.

Der Reformer 3 kann in einen Gemischbildungsabschnitt 36 und einen Brenngaserzeugungsabschnitt 37 unterteilt sein. Der Gemischbildungsabschnitt 36 weist den Kraftstoffeingang 12, den Oxidatoreingang 13 und optional den Anodenabgaseingang 33 auf und dient zur Bildung eines Gemischs zumindest aus dem Oxidatorgas und dem Kraftstoff sowie gegebenenfalls aus dem Anodenabgas. Sofern ein flüssiger Kraftstoff zugeführt wird, dient der Gemischbildungsabschnitt 36 auch zur Verdampfung des Kraftstoffs, um ein gasförmiges Gemisch zu erhalten. Der Kraftstoff wird dabei über eine Kraftstoffversorgungsleitung 38 zugeführt, in der ein Gebläse bzw. eine Pumpe 39 angeordnet sein kann. Der unmittelbar an den Gemischbildungsabschnitt 36 angrenzende Brenngaserzeugungsabschnitt 37 dient zur Erzeugung des Brenngases aus dem Gemisch, das vom Gemischerzeugungsabschnitt 36 bereitgestellt wird. Üblicherweise umfasst der Brenngaserzeugungsabschnitt 37 einen Katalysator, der bei einem fetten Gemisch durch partielle Oxidation das wasserstoffhaltige Brenngas erzeugt.

Zur Steuerung des Brennstoffzellensystems 1 können diverse Temperatursensoren 40 vorgesehen sein. Beispielsweise befinden sich derartige Temperatursensoren 40 zwischen dem Gemischbildungsabschnitt 36 und dem Brenngaserzeugerabschnitt 37 bzw. am Brenngasausgang 14 bzw. am Austritt des Restgasbrenners 4.

## Patentansprüche

1. Brennstoffzellensystem, insbesondere für ein Kraftfahrzeug,
- mit einer Brennstoffzelle (2) zur Stromerzeugung aus Oxidatorgas und Brenngas, die einen Anodeneingang (7), einen Anodenausgang (8), einen Kathodeneingang (9), einen Kathodenausgang (10) und wenigstens einen Stromanschluss (11) aufweist,
- mit einem Reformer (3) zur Brenngaserzeugung aus Oxidatorgas und Kraftstoff, der einen Brenngasausgang (14) aufweist,
- mit einer ersten Oxidatorleitung (20) zur Versorgung der Brennstoffzelle (2) mit Oxidatorgas, die mit dem Kathodeneingang (9) verbunden ist,
- mit einer zweiten Oxidatorleitung (21) zur Versorgung des Reformers (3) mit Oxidatorgas,
- mit einer Brennstoffzellenabgasleitung (19), die über eine Anodenabgasleitung (16) an den Anodenausgang (8) und über eine Kathodenabgasleitung (17) an den Kathodenausgang (10) angeschlossen ist,
- mit einem Restgasbrenner (4) zum Verbrennen eines Gemischs aus Anodenabgas und Kathodenabgas, der in die Brennstoffzellenabgasleitung (19) eingebunden oder daran angeschlossen ist,
- mit einem Wärmeübertrager (5), der einerseits stromab des Restgasbrenners (4) in die Brennstoffzellenabgasleitung (19) und andererseits in die erste Oxidatorleitung (20) eingebunden ist,
- wobei stromab des Restgasbrenners (4) ein Oxidationskatalysator (25) in die Brennstoffzellenabgasleitung (19) eingebunden ist,
- wobei zumindest der Reformer (3), die Brennstoffzelle (2), der Restgasbrenner (4) und der Wärmeübertrager (5) innerhalb einer thermisch isolierenden Isolationsbox (35) angeordnet sind, ,
**dadurch gekennzeichnet,**
- **dass** der Reformer (3) einen Kraftstoffeingang (12) und einen Oxidatoreingang (13) aufweist,
- **dass** die zweite Oxidatorleitung (21) mit dem Oxidatoreingang (13) des Reformers (3) verbunden ist,
- **dass** der Oxidationskatalysator (25) in der Brennstoffzellenabgasleitung (19) stromab des Wärmeübertragers (5) angeordnet ist,
- **dass** zumindest der Oxidationskatalysator (25) außerhalb der Isolationsbox (35) angeordnet ist.

2. Brennstoffzellensystem nach Anspruch 1,
**dadurch gekennzeichnet,**
**dass** stromab des Wärmeübertragers (5) zumindest ein Zusatzwärmeübertrager (26) in die Brennstoffzellenabgasleitung (19) eingebunden ist, der außerdem in einen Abwärmepfad (27) zur Entnahme von Wärme aus dem Abgas der Brennstoffzelle (2) und/oder des Restgasbrenners (4) eingebunden ist.

3. Brennstoffzellensystem nach Anspruch 2,
**dadurch gekennzeichnet,**
**dass** der Oxidationskatalysator (25) in der Brennstoffzellenabgasleitung (19) stromauf des Zusatzwärmeübertragers (26) angeordnet ist.

4. Brennstoffzellensystem nach Anspruch 2,
**dadurch gekennzeichnet,**
**dass** der Oxidationskatalysator (25) in der Brennstoffzellenabgasleitung (19) stromab des Zusatzwärmeübertragers (26) angeordnet ist.

5. Brennstoffzellensystem nach Anspruch 2,
**dadurch gekennzeichnet,**
**dass** der Oxidationskatalysator (25) durch eine im Zusatzwärmeübertrager (26) ausgebildete katalytisch aktive Beschichtung in den Zusatzwärmeübertrager (26) integriert ist.

6. Brennstoffzellensystem nach einem der Ansprüche 1 bis 5,
**dadurch gekennzeichnet,**
**dass** der Abwärmepfad (27) durch eine Kühlmittelleitung (28) eines Kühlkreises einer Brennkraftmaschine des Kraftfahrzeugs gebildet ist.

7. Brennstoffzellensystem nach einem der Ansprüche 1 bis 5,
**dadurch gekennzeichnet,**
**dass** der Abwärmepfad (27) durch eine Warmluftleitung (29) einer Innenraumheizeinrichtung des Kraftfahrzeugs gebildet ist.

8. Brennstoffzellensystem nach einem der Ansprüche 1 bis 5,
**dadurch gekennzeichnet,**
**dass** der Abwärmepfad (27) durch die zweite Oxidatorleitung (21) gebildet ist.

9. Brennstoffzellensystem nach einem der Ansprüche 2 bis 8,
**dadurch gekennzeichnet,**
**dass** der Zusatzwärmeübertrager (26) außerhalb der Isolationsbox (35) angeordnet ist.

10. Brennstoffzellensystem nach einem der Ansprüche 1 bis 9,
**dadurch gekennzeichnet,**
**dass** stromauf des Wärmeübertragers (5) ein Rezirkulationswärmeübertrager (30) in die erste Oxidatorleitung (20) eingebunden ist, der außerdem in eine Rückführleitung (31) eingebunden ist, die einerseits an die Anodenabgasleitung (16) und andererseits an einen am Reformer (3) ausgebildeten Anodenabgaseingang (33) angeschlossen ist.

11. Brennstoffzellensystem nach Anspruch 10,
**dadurch gekennzeichnet,**
**dass** der Rezirkulationswärmeübertrager (30) innerhalb oder außerhalb der Isolationsbox (35) angeordnet ist.

## Claims

1. A fuel cell system, in particular for a motor vehicle,
- with a fuel cell (2) for power generation from oxidant gas and fuel gas, which comprises an anode input (7), an anode output (8), a cathode input (9), a cathode output (10) and at least one power connection (11),
- with a reformer (3) for fuel gas generation from oxidant gas and fuel, comprising a fuel gas output (14),
- with a first oxidant line (20) for supplying the fuel cell (2) with oxidant gas, which is connected to the cathode input (9),
- with a second oxidant line (21) for supplying the reformer (3) with oxidant gas,
- with a fuel cell waste gas line (19), which is connected via an anode waste gas line (16) to the anode output (8) and via a cathode waste gas line (17), to the cathode output (10),
- with a residual gas burner (4) for burning a mixture of anode waste gas and cathode waste gas, which is embedded in the fuel cell waste gas line (19) or connected thereto,
- with a heat transfer device (5), which on the one hand is embedded in the fuel cell waste gas line (19) downstream of the residual gas burner (4) and on the other hand in the first oxidant line (20),
- wherein downstream of the residual gas burner (4) an oxidation catalytic converter (25) is embedded in the fuel cell waste gas line (19),
- wherein at least the reformer (3), the fuel cell (2), the residual gas burner (4) and the heat transfer device (5) are arranged within a thermally insulating insulation box (35),
**characterized**
- **in that** the reformer (3) comprises a fuel input (12) and an oxidant input (13),
- **in that** the second oxidant line (21) is connected to the oxidant input (18) of the reformer (3),
- **in that** the oxidation catalytic converter (25) is arranged in the fuel cell waste gas line (19) downstream of the heat transfer device (5),
- **in that** at least the oxidation catalytic converter (25) is arranged outside the insulation box (35).

2. The fuel cell system according to Claim 1, **characterized in that** downstream of the heat transfer device (5) at least one additional heat transfer device (26) is embedded in the fuel cell waste gas line (19), which is additionally embedded in a waste heat path (27) for removing heat from the waste gas of the fuel cell (2) and/or of the residual gas burner (4).

3. The fuel cell system according to Claim 2, **characterized in that** the oxidation catalytic converter (25) is arranged in the fuel cell waste gas line (19) upstream of the additional heat transfer device (26).

4. The fuel cell system according to Claim 2, **characterized in that** the oxidation catalytic converter (25) is arranged in the fuel cell waste gas line (19) downstream of the additional heat transfer device (26).

5. The fuel cell system according to Claim 2, **characterized in that** the oxidation catalytic converter (25) is integrated in the additional heat transfer device (26) through a catalytically active coating formed in the additional heat transfer device (26).

6. The fuel cell system according to any one of the Claims 1 to 5, **characterized in that** the waste heat path (27) is formed through a coolant line (28) of a cooling circuit of a combustion engine of the motor vehicle.

7. The fuel cell system according to any one of the Claims 1 to 5, **characterized in that** the waste heat path (27) is formed through a warm air line (29) of an interior heating device of the motor vehicle.

8. The fuel cell system according to any one of the Claims 1 to 5, **characterized in that** the waste heat path (27) is formed by the second oxidant line (21).

9. The fuel cell system according to any one of the Claims 2 to 8, **characterized in that** the additional heat transfer device (26) is arranged outside the insulation box (35).

10. The fuel cell system according to any one of the Claims 1 to 9, **characterized in that** upstream of the heat transfer device (5) a recirculation heat transfer device (30) is embedded in the first oxidant line (20), which is additionally embedded in a return line (31), which on the one hand is connected to the anode waste gas line (16) and on the other hand to an anode waste gas input (33) formed on the reformer (3).

11. The fuel cell system according to Claim 10, **characterized in that** the recirculation heat transfer device (30) is arranged within or outside the insulation box (35).

## Revendications

1. Système à cellules de combustible, en particulier pour un véhicule automobile, comprenant
- une cellule de combustible (2) pour la production de courant à partir de gaz oxydant et de gaz combustible, qui présente une entrée d'anode (7), une sortie d'anode (8), une entrée de cathode (9), une sortie de cathode (10) et au moins un branchement de courant (11),
- un reformeur (3) pour la production de gaz combustible à partir de gaz oxydant et de carburant, qui présente une sortie de gaz combustible (14),
- une première conduite d'oxydant (20) pour l'alimentation de la cellule de combustible (2) en gaz oxydant, qui est reliée à l'entrée de cathode (9),
- une seconde conduite d'oxydant (21) pour l'alimentation du reformeur (3) en gaz oxydant,
- une conduite de gaz brûlés de cellules de combustible (19), qui est raccordée par une conduite de gaz brûlés d'anode (16) à la sortie d'anode (8) et par une conduite de gaz brûlés de cathode (17) à la sortie de cathode (10),
- un brûleur à gaz résiduel (4) pour la combustion d'un mélange de gaz brûlés d'anode et de gaz brûlés de cathode, qui est intégré dans la conduite de gaz brûlés de cellules de combustible (19) ou est raccordé à celle-ci,
- un échangeur de chaleur (5), qui est intégré d'une part en aval du brûleur à gaz résiduel (4) dans la conduite de gaz brûlés de cellules de combustible (19) et d'autre part dans la première conduite d'oxydant (20),
- un convertisseur catalytique à oxydation (25) étant intégré en aval du brûleur à gaz résiduel (4) dans la conduite de gaz brûlés de cellules de combustible (19),
- au moins le reformeur (3), la cellule de combustible (2), le brûleur à gaz résiduel (4) et l'échangeur de chaleur (5) étant disposés à l'intérieur d'un boîtier d'isolation (35) isolant thermiquement,
**caractérisé**
- **en ce que** le reformeur (3) présente une entrée de carburant (12) et une entrée d'oxydant (13),
- **en ce que** la seconde conduite d'oxydant (21) est reliée à l'entrée d'oxydant (13) du reformeur (3),
- **en ce que** le convertisseur catalytique à oxydation (25) est disposé dans la conduite de gaz brûlés de cellules de combustible (19) en aval de l'échangeur de chaleur (5),
- **en ce qu'**au moins le convertisseur catalytique à oxydation (25) est disposé à l'extérieur du boîtier d'isolation (35).

2. Système de cellules de combustible selon la revendication 1,
**caractérisé**
**en ce qu'**au moins un échangeur de chaleur supplémentaire (26) est intégré en aval de l'échangeur de chaleur (5) dans la conduite de gaz brûlés de cellules de combustible (19), lequel échangeur de chaleur supplémentaire est intégré en outre dans un chemin d'évacuation de chaleur (27) pour le prélèvement de chaleur sur les gaz brûlés de la cellule de combustible (2) et/ou du brûleur à gaz résiduel (4).

3. Système de cellules de combustible selon la revendication 2,
**caractérisé**
**en ce que** le convertisseur catalytique à oxydation (25) est disposé dans la conduite de gaz brûlés de cellules de combustible (19) en amont de l'échangeur de chaleur supplémentaire (26).

4. Système de cellules de combustible selon la revendication 2,
**caractérisé**
**en ce que** le convertisseur catalytique à oxydation (25) est disposé dans la conduite de gaz brûlés de cellules de combustible (19) en aval de l'échangeur de chaleur supplémentaire (26).

5. Système de cellules de combustible selon la revendication 2,
**caractérisé**
**en ce que** le convertisseur catalytique à oxydation (25) est intégré dans l'échangeur de chaleur supplémentaire (26) par un revêtement actif au plan catalytique, conçu dans l'échangeur de chaleur supplémentaire (26)

6. Système de cellules de combustible selon l'une des revendications 1 à 5,
**caractérisé en ce que**
le chemin de chaleur perdue (27) est formé par une conduite de réfrigérant (28) d'un circuit réfrigérant d'un moteur à combustion interne du véhicule.

7. Système de cellules de combustible selon l'une des revendications 1 à 5,
**caractérisé**
**en ce que** le chemin de chaleur perdue (27) est formé par une conduite d'air chaud (29) d'un dispositif de chauffage d'habitacle du véhicule.

8. Système de cellules de combustible selon l'une des revendications 1 à 5, **caractérisé en ce que**
le chemin de chaleur perdue (27) est formé par la seconde conduite d'oxydant (21).

9. Système de cellules de combustible selon l'une des revendications 2 à 8, **caractérisé**
**en ce que** l'échangeur de chaleur supplémentaire (26) est disposé à l'extérieur du boîtier d'isolation (35).

10. Système de cellules de combustible selon l'une des revendications 1 à 9,
**caractérisé**
**en ce qu'**un échangeur de chaleur à recirculation (30) est intégré en amont de l'échangeur de chaleur (5) dans la première conduite d'oxydant (20), lequel échangeur est intégré en outre dans une conduite de recyclage (31), laquelle est raccordée d'une part à la conduite de gaz brûlés d'anode (16) et d'autre part à une entrée de gaz brûlés d'anode (3) formée sur le reformeur (33).

11. Système de cellules de combustible selon la revendication 10,
**caractérisé en ce que**
l'échangeur de chaleur à recirculation (30) est disposé à l'intérieur ou à l'extérieur du boîtier d'isolation (35).
